# EUROPÄISCHE PATENTSCHRIFT

(11) **EP 1 609 652 B1**
(45) Veröffentlichungstag und Bekanntmachung des Hinweises auf die Patenterteilung: **08.09.2010**
(21) Anmeldenummer: 05013542.5
(22) Anmeldetag: 23.06.2005
(51) Int. Cl.: B60J 7/20

(54) **Verdeck für ein Cabriolet-Fahrzeug**
Top for convertible vehicle
Capote pour véhicule convertible

(30) Priorität: 25.06.2004 DE 102004030882
(43) Veröffentlichungstag der Anmeldung: 28.12.2005
(73) Patentinhaber: Webasto AG, 82131 Stockdorf (DE)
(72) Erfinder: Haberl, Franz, 94574 Wallerfing (DE); Obendiek, Klaus, 94032 Passau (DE)
(74) Vertreter: Sparing, Rolf Klaus

(56) Entgegenhaltungen:
- DE-A1- 10 039 682
- US-A1- 2002 135 201
- US-A1- 2003 080 581

## Beschreibung

Die Erfindung betrifft ein Verdeck für ein Cabriolet-Fahrzeug.

Es ist bekannt öffnungsfähige Verdecke für Cabriolet-Fahrzeuge in einem geöffneten Verdeckzustand in einem im allgemeinen heckseitig angeordneten Ablageraum des Fahrzeugs abzulegen. Dabei sollte der Ablageraum auch in geschlossenem Verdeckzustand nach oben hin überdeckt sein. Dadurch verbleibt kein offener Hohlraum, der zum einen nicht ansprechend aussieht und zum anderen die Gefahr birgt, dass etwa Kinder Gegenstände während der Fahrt in den Ablageraum werfen können.

Aus dem Bau von Cabriolet-Verdecken ist es bekannt den Ablageraum mittels eines separat angetriebenen bewegbaren Deckelelements abzudecken. Ein solches separat bewegbares Deckelelement kann etwa an einem heckseitigen Verdeckkastendeckel angelenkt sein und weist im allgemeinen eine eigene Antriebsvorrichtung auf.

WO 2005/102 756 A1, die nach dem Zeitrang der vorliegenden Anmeldung veröffentlicht wurde, zeigt ein Verdeck für ein Cabriolet-Fahrzeug mit einem Abdeckmittel, welches in einem geschlossenem Verdeckzustand einen Ablageraum überdeckt. Das Abdeckmittel ist fest mit einem Spannbügel verbunden und gemeinsam mit diesem entlang eines Langlochs in einer rückwärtigen Sitzbank verstellbar, so dass das Abdeckmittel nicht relativ zu dem Spannbügel bewegbar ist. Ein Manschettenteil verbindet einen im rückwärtigen Bereich vorgesehenen, oberen Karosserierand und den Spannbügel.

DE 102 42 451 A1 zeigt ein Cabriolet-Verdeck mit einem Abdeckmittel, das in einem geschlossenen Verdeckzustand zum Überdecken eines Ablageraums vorgesehen ist. Dabei besteht das Verdeck aus mehreren Schalenteilen, die bei einem Öffnen des Verdecks teilweise ober- und teilweise unterhalb des Abdeckmittels angeordnet werden. Das oberhalb des Abdeckmittels angebrachte hintere Schalenteil wird in dem geöffneten Verdeckzustand von einer Kofferraumplatte teilweise abgedeckt. Das Abdeckmittel umfasst ein starres Mittelteil, das über eine Gelenkachse an einem in dem Verdeckkasten angebrachten Trägerteil angelenkt ist, wobei seitliche Seitenteile über eine Schwenkachse und Verbindungskinematik an dem Mittelteil schwenkbar befestigt sind, wobei die Seitenteile durch einen an der Innenseite des hinteren Schalenteils angebrachten Niederhalter in eine abgeklappte Stellung verschwenkt werden.

DE 101 46 267 A1 beschreibt ein Verdeck für ein Cabriolet-Fahrzeug, umfassend einen Ablageraum für das drei Dachteile umfassende Verdeck, wobei der Ablageraum von einer Heckklappe sowie zumindest teilweise auch von einem als Abdeckelement ausgebildeten im wesentlichen formsteifen Abdeckmittel abgedeckt ist, und wobei ein heckseitiger Verdeckabschnitt, insbesondere eine in dem hinteren Dachteil angeordnete Heckscheibe, in einem geschlossenen Verdeckzustand zumindest teilweise oberhalb des Ablageraums angeordnet ist. Das Abdeckelement ist mittels einer Viergelenkanordnung an eine Rückseite eines Sitzes und damit karosserieseitig angelenkt, wobei eines der Gelenke des Viergelenks an dem Abdeckelement längsverschieblich geführt ist. An dem Abdeckelement ist eine erste Krafteinleitungseinheit, umfassend einen Elektromotor, ein Getriebe und ein Steigungskabel, angeordnet. Nachteilig ist, daß sowohl die Viergelenkanordnung als auch die Krafteinleitungseinheit einen Platz beanspruchen, der für das Verdeck vorgesehen sein sollte. Nachteilig an der Anordnung der Krafteinleitungseinheit an dem Abdeckelement ist, daß die Krafteinleitungseinheit nicht nur das Abdeckelement, sondern zusätzlich noch ihr eigenes Gewicht gegen die Karosserie abstützten muß.

DE 196 37 038 C1 beschreibt eine Abdeckung für eine Gestängedurchtrittsöffnung eines Gestänges für ein Verdeck eines Cabriolet-Fahrzeugs, wobei die Gestängedurchtrittsöffnung über ein elastisches Element, speziell ein Spannband, abzudecken ist. Das Spannband ist an einem Halteelement befestigt, wobei das Halteelement klappbar und damit die Gestängedurchtrittsöffnung verschließbar ist. Nachteilig ist, daß das Spannband als Abdeckung allenfalls für eine kleine Öffnung wie eine Gestängedurchtrittsöffnung geeignet ist, nicht jedoch, um einen Ablageraum eines Verdecks zu überdecken, insbesondere schon deshalb weil hierzu sehr große Spannkräfte erforderlich sind. Nachteilig ist ferner, daß das Halteelement die Anordnung insgesamt sehr aufwendig werden läßt.

Es ist die Aufgabe der Erfindung ein Verdeck für ein Cabriolet-Fahrzeug dahingehend zu verbessern, dass eine Überdeckung des Ablageraums im geschlossenen Verdeckzustand auf einfache und kostengünstige Weise realisiert ist.

Diese Aufgabe wird durch ein Verdeck für ein Cabriolet-Fahrzeug erfindungsgemäß mit den Merkmalen des Anspruchs 1 gelöst.

Durch die vorteilhafte Verbindung des Abdeckmittels mit dem heckseitigen Verdeckabschnitt über das Verbindungsmittel ist es ermöglicht, dass ein Verschwenken des Abdeckmittels in eine Öffnungsbewegung des Verdecks integriert ist, so dass keine weiteren mechanischen Steuereinheiten oder Antriebsvorrichtungen zur Bewegung des Abdeckmittels erforderlich sind.

Besonders vorteilhaft erfolgt dabei im Zuge einer Verdecköffnungsbewegung eine automatische Ablage des Abdeckmittels in dem Ablageraum, so dass eine Bedienperson von einer manuellen Entfernung des Abdeckmittels entbunden ist.

Die erfindungsgemäße Verkoppelung des Abdeckmittels mit dem hinteren Verdeckabschnitt ist in besonders vorteilhafter Weise bei Verdecktypen einsetzbar, die keinen den Ablageraum überdeckenden Verdeckkastendeckel aufweisen oder bei denen ein solcher Deckel den Ablageraum nur teilweise überdeckt. Dies sind insbesondere herkömmliche Verdecktypen, bei denen das geöffnete Verdeck mittels einer zusätzlichen Persenning geschützt wird, sowie Verdecktypen, bei denen ein als starres Schalenteil ausgebildeter Bereich des Verdecks im geöffneten Zustand eine Abdeckung über dem abgelegten Verdeck ausbildet.

In einer vorteilhaften Ausgestaltung der vorliegenden Erfindung umfasst der heckseitige Verdeckabschnitt eine hintere seitliche Dachsäule des Verdeckes, wobei insbesondere vorteilhaft ein Teil eines vorgesehenen Innenhimmels des Verdecks in dem geschlossenen Verdeckzustand vor der hinteren seitlichen Dachsäule angeordnet ist und wobei das Verbindungsmittel den Teil des Innenhimmels umfasst. Hierdurch wird das Abdeckmittel vorteilhaft sowohl optisch als auch funktionell in eine innenseitige Verkleidung des Verdecks integriert. Alternativ und/oder ergänzend zu der Anbindung an den Teil des Innenhimmels können auch Verbindungsmittel in Form von Zugbändern vorgesehen sein, die vorteilhaft auch hinter dem Innenhimmel verlaufen können.

Weiterhin ist vorteilhaft vorgesehen, dass der heckseitige Verdeckabschnitt einen Spannbügel des Verdecks umfasst, wobei das Abdeckmittel durch das Verbindungsmittel gegen den Spannbügel spannbar ist. Hierdurch ist auch einfacherweise eine gespannte Haltung des Abdeckmittel, insbesondere in Fahrzeuglängsrichtung, realisiert. Das Verbindungsmittel kann dabei bevorzugt aus einem durchgängigen flexiblen Streifen bestehen.

Weiterhin vorteilhaft kann vorgesehen sein, dass der heckseitige Verdeckabschnitt eine geneigte hintere Verdeckfläche umfasst, wobei insbesondere das Abdeckmittel mittels des Verbindungsmittels an der geneigten Verdeckfläche gehalten ist. Hierdurch wird eine bewegbare Halterung des Abdeckmittel, insbesondere in senkrechter Richtung, realisiert. Das Verbindungsmittel zur Verbindung mit der geneigten Verdeckfläche kann insbesondere vorteilhaft ein durchgängiger Stoffstreifen sein. Weiterhin vorteilhaft kann die geneigte Verdeckfläche eine starre Heckscheibe des Verdecks umfassen, so dass gegebenenfalls vorteilhaft das Verbindungsmittel an einen unteren Rahmen der starren Heckscheibe festgelegt sein kann.

Dabei kann vorteilhaft die starre Heckscheibe in dem geöffneten Verdeckzustand unmittelbar auf dem Abdeckmittel aufliegen. Hierdurch ist eine besonders raumsparende Ablage von Heckscheibe und Abdeckmittel gewährleistet, wobei die Heckscheibe zusätzlich durch das Abdeckmittel vor einer Beschädigung, z. B. einem Verkratzen geschützt ist, da das Abdeckmittel sich unterhalb der Heckscheibe befindet, so dass ein Beladen eines Kofferraums mit Gegenständen nicht zu einem Berühren der Oberfläche der Heckscheibe führen kann. Weiterhin kann bei einem erfindungsgemäßen Verdeck vorteilhaft vorgesehen sein, dass das Abdeckmittel gelenkig mit dem Verdeck verbunden ist, wobei besonders vorteilhaft eine Verbindung des Abdeckmittels mit einem Spannbügel des Verdecks über eine Viergelenkanordung erfolgt. Hierdurch ist bei nur geringfügig erhöhtem Bauaufwand eine besonders robuste und spielfreie Führung des Abdeckmittels ermöglicht.

Weiterhin ist vorteilhaft vorgesehen, dass in dem geschlossenen Verdeckzustand eine vordere Kante des Abdeckmittels stoßbündig an einer heckseitigen Abtrennung eines Passagierraums des Fahrzeugs anliegt. Dies ermöglicht auf einfache Weise eine vollständige Abdeckung des Ablageraums, wobei die heckseitige Abtrennung des Passagierraums insbesondere die Rückseite von hinteren Passagiersitzen sein kann und wobei das Abdeckmittel in Form und Funktion einer herkömmlichen Hutablage eines Fahrzeugs entspricht.

Besonders vorteilhaft ist das Abdeckmittel in dem geschlossenen Verdeckzustand durch das Verbindungsmittel in Fahrzeuglängsrichtung gehalten, und weiterhin vorteilhaft ist das Abdeckmittel in dem geschlossenen Verdeckzustand durch das Verbindungsmittel in senkrechter Richtung gehalten. Hierdurch ist insgesamt eine sichere Halterung des Abdeckmittels ermöglicht, so dass eine Vibration oder ein Bewegen des Abdeckmittels während der Fahrt vermieden wird.

Weitere Vorteile und Merkmale ergeben sich aus dem nachfolgend beschriebenen Ausführungsbeispiel sowie aus den abhängigen Ansprüchen.

Nachfolgend werden bevorzugte Ausführungsbeispiele eines erfindungsgemäßen Verdecks beschrieben und anhand der anhängigen Zeichnungen näher erläutert.
- Fig. 1: zeigt eine schematische räumliche Ansicht eines hinteren Verdeckabschnitts eines erfindungsgemäßen Verdecks im geschlossenen Verdeckzustand.
- Fig. 2: zeigt eine räumliche Schnittansicht des Verdecks aus Fig. 1.
- Fig. 3: zeigt eine räumliche Schnittansicht des Verdecks aus Fig. 1 in einem geöffneten Verdeckzustand.
- Fig. 4: zeigt eine schematische seitliche Schnittansicht eines erfindungsgemäßen Verdecks in einem geschlossenen Zustand (durchgezogene Linien) und in einem geöffneten Zustand (gestrichelte Linien).
- Fig.5: zeigt einen Schnitt in Fahrzeuglängsrichtung durch einen hinteren seitlichen Bereich eines erfindungsgemäßen Verdecks in einem geschlossenen Verdeckzustand.
- Fig. 6: zeigt eine schematische Seitenansicht eines zweiten Ausführungsbeispiels eines erfindungsgemäßen Verdecks in einem geschlossenen Verdeckzustand.

Das bevorzugte Ausführungsbeispiel eines erfindungsgemäßen Verdecks umfasst einen heckseitigen Verdeckabschnitt 3. Der Verdeckabschnitt 3 umfasst Bereiche seitlicher hinterer Dachsäulen 7, wobei das Verdeck insbesondere im Bereich dieser Säulen über ein Lenkergetriebe 13 mit einer Karosserie des Fahrzeugs verbunden ist. Ferner umfasst der Verdeckabschnitt 3 eine geneigte hintere Verdeckfläche 9, in die eine gebogene starre Heckscheibe 10 mittels eines Heckscheibenrahmens 10a eingepasst ist.

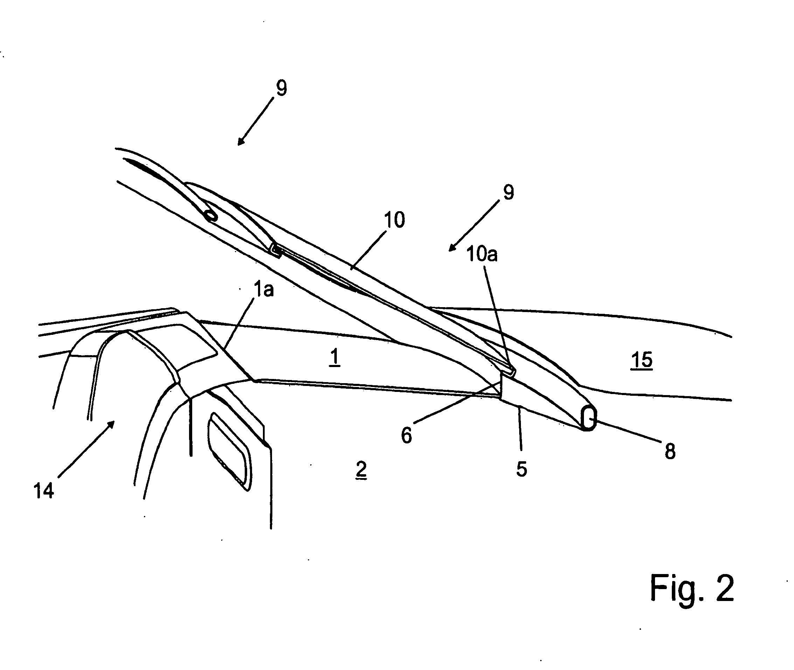

Ein Ablageraum 2 für das Verdeck befindet sich im wesentlichen unter dem heckseitigen Verdeckabschnitt 3 bzw. unterhalb der geneigten Verdeckfläche 9 (siehe Fig. 2). Der Ablageraum 2 für das Verdeck wird in Fahrtrichtung von den Rückseiten hinterer Passagiersitze 14 begrenzt, welche zugleich eine heckseitige Abtrennung 12 des Passagierraums des Fahrzeugs ausbilden.

Die geneigte Verdeckfläche 9 wird heckseitig von einem starren, bewegbaren Spannbügel 8 abgeschlossen, an welchen sich im geschlossenen Verdeckzustand heckseitig ein Heckelement 15 der äußeren Karosserie des Fahrzeugs anschließt. Im vorliegenden Ausführungsbeispiel ist dabei der Spannbügel 8 im geschlossenen Verdeckzustand von unten gegen eine vordere Abschlusskante des Heckelements 15 dichtend angedrückt (siehe Fig. 2).

Der Ablageraum 2 ist im geschlossenen Verdeckzustand durch ein formsteifes Abdeckmittel 1 überdeckt. Das Abdeckmittel 1 stößt mit einer vorderen Kante 1a an die heckseitige Abtrennung 12 an, ist mit dieser jedoch nicht fest verbunden. Das insgesamt im wesentlichen waagerecht ausgerichtete Abdeckmittel 1 ist nach seiner Orientierung, Größe und Anordnung mit einer Hutablage einer herkömmlichen Limousine vergleichbar, welche sich unterhalb einer schrägen Heckscheibe und hinter den hinteren Passagiersitzen befindet.

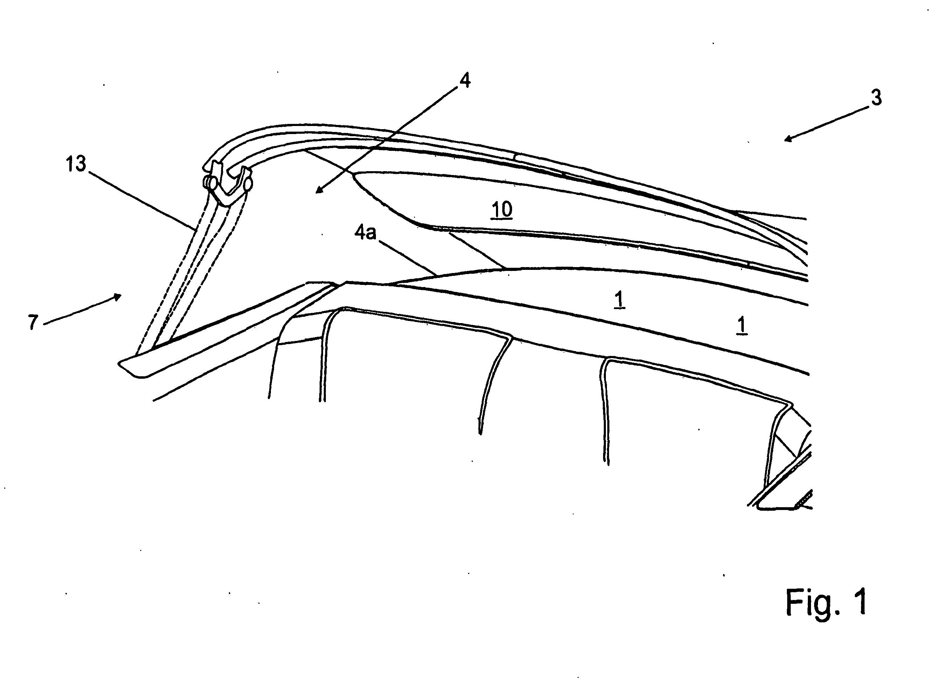

Das erfindungsgemäße Verdeck ist mit einem Innenhimmel 4 ausgekleidet, der im geschlossenen Verdeckzustand die innenseitige Oberfläche des Verdecks ausbildet und Gestängeteile vorteilhaft kaschiert. Ein Teil des Innenhimmels 4 überdeckt dabei die hinteren seitlichen Dachsäulen 7 des Verdecks (siehe Fig. 1). Eine untere hintere Abschlusskante 4a des Innenhimmelteils 4 ist dabei mit einem seitlichen Rand des Abdeckmittels 1 verbunden. Auf diese Weise hängt das Abdeckmittel 1 an dem Innenhimmelteil 4 und wird zum einen in senkrechter Richtung und zum andern auch in Fahrzeuglängsrichtung durch den gespannten Innenhimmel positioniert. Auf diese Weise ist durch den Innenhimmelteil 4 ein Verbindungsmittel zur Verbindung des Abdeckmittels 1 mit dem heckseitigen Verdeckabschnitt 3 ausgebildet.

Zur Verbesserung der abgespannten Haltung des Abdeckmittels 1 im geschlossenen Verdeckzustand ist zudem ein heckseitiger Rand des Abdeckmittels 1 über ein weiteres Verbindungsmittel 5 (siehe Fig. 2) beweglich mit dem Spannbügel 8 des Verdecks verbunden. Das Verbindungsmittel 5 ist dabei als durchgängiger flexibler Streifen entlang der hinteren Abschlusskante des Abdeckmittels 1 ausgebildet.

Eine weitere Verbesserung der abgespannten Halterung des Abdeckmittels 1 wird durch ein weiteres Verbindungsmittel 6 gewährleistet, welches sich im wesentlichen senkrecht erstreckt und als flexibler Streifen ausgebildet ist, der eine untere Kante eines Heckscheibenrahmens 10a mit der hinteren Abschlusskante des Abdeckmittels 1 verbindet (siehe Fig. 2).

Bei einer angenäherten Betrachtung des Abdeckmittels 1 als rechteckiger Körper sind somit drei der vier Seiten des Abdeckmittels 1 jeweils durchgängig über Verbindungsmittel 4, 5, 6 mit dem hinteren Verdeckabschnitt 3 des Verdecks verbunden. Insgesamt ist hierdurch eine spannende Halterung des Abdeckmittels 1 sowohl in der Senkrechten als auch in Fahrzeuglängsrichtung als auch in Fahrzeugquerrichtung erreicht.

Zudem ist das Abdeckmittel 1 im geschlossenen Verdeckzustand mit seiner vorderen Abschlusskante 1a von unten gegen einen Vorsprung 16 der heckseitigen Abtrennung 12 gezogen, wodurch eine noch bessere und vibrationssicherere Halterung des Abdeckmittels 1 gewährleistet ist.

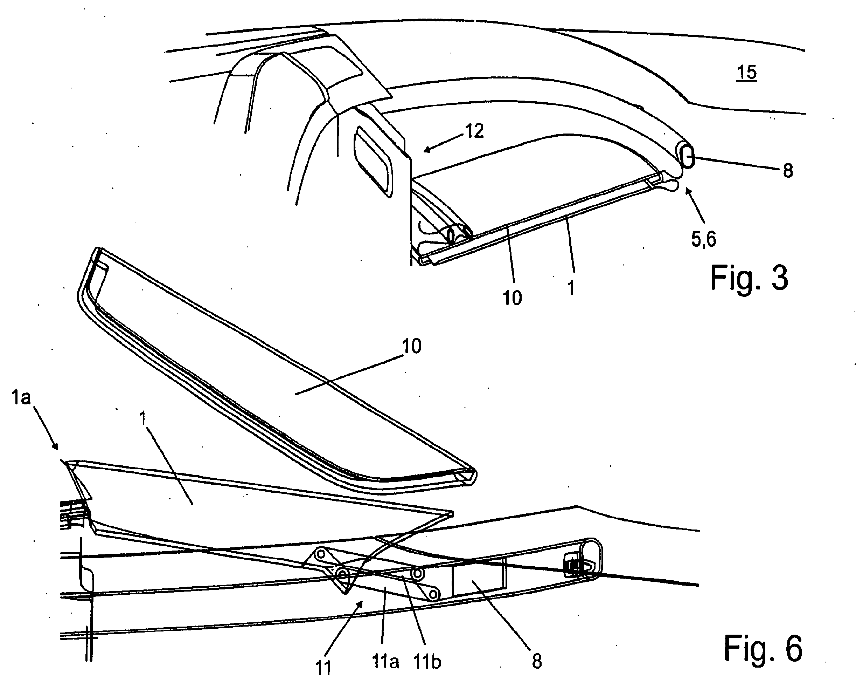

Im Zuge einer Öffnungsbewegung des Verdecks wird durch die eingeleitete Bewegung von das Verdeck tragenden Gestängeteilen der Innenhimmel und somit das Innenhimmelteil 4 entspannt, wodurch das Abdeckmittel 1 sich in den Ablageraum 2 absenkt. Beim vorliegenden Verdecktyp wird zudem der Spannbügel 8 ein Stück in den Ablageraum 2 abgesenkt, wodurch eine weitere Absenkung des Abdeckmittels 1 erfolgt (siehe Fig. 3).

Wie aus der Darstellung des geöffneten Verdeckzustandes in Fig. 3 ersichtlich ist, kommt die starre Heckscheibe 10 im wesentlichen auf dem Abdeckmittel 1 zu liegen, so dass die empfindliche Oberfläche der Heckscheibe 10 durch das Abdeckmittel 1 von unten geschützt ist.

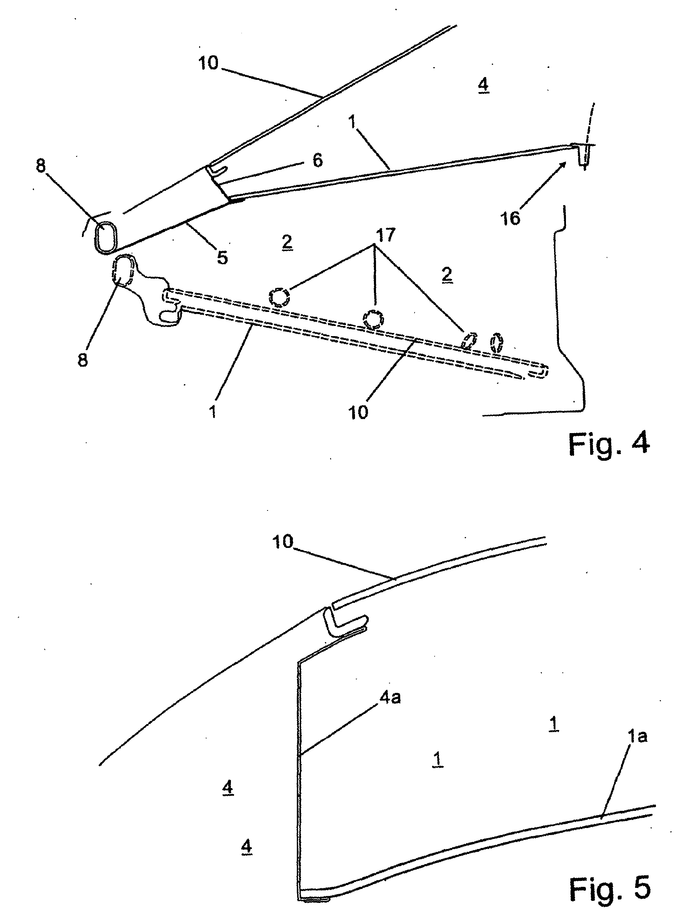

Die Darstellung gemäß Fig. 4 zeigt eine seitliche Schnittansicht durch den heckseitigen Verdeckabschnitt 3, wobei sowohl eine geschlossene Positionierung (durchgezogene Linien) als auch eine geöffnete Positionierung (gestrichelte Linien) von Spannbügel 8, Heckscheibe 10 und Abdeckmittel 1 dargestellt ist. Ferner sind in Fig. 4 schematisch Schnitte durch im geöffneten Verdeckzustand abgelegte Spriegel 17 des Verdecks gezeigt.

Aus der Schnittansicht durch den heckseitigen Verdeckabschnitt 3 des Verdecks im geschlossenen Zustand gemäß Fig. 5 ist insbesondere die Anbindung der Innenhimmelkante 4a an das Abdeckmittel 1 ersichtlich.

Fig. 6 zeigt eine ausschnittsweise Darstellung eines zweiten bevorzugten Ausführungsbeispiels eines erfindungsgemäßen Verdecks. Um eine präzise Positionierung und Führung des Abdeckmittels 1 zu erreichen, ist das Abdeckmittel 1 mittels einer Viergelenkanordnung 11 mit dem heckseitigen Spannbügel 8 des Verdecks verbunden (siehe Fig. 6). Die beiden Lenker 11a, 11b der Viergelenkanordnung 11 ermöglichen dabei eine Verschwenkung des Abdeckmittels 1 gegenüber dem Spannbügel 8, durch die das Abdeckmittel 1 insbesondere während einer Öffnungs- oder Schließbewegung des Verdecks präzise in seiner Bewegung definiert ist. Somit ist auch durch die Viergelenkanordnung 11 ein Verbindungsmittel zwischen heckseitigen Verdeckabschnitt 3 und Abdeckmittel 1 ausgebildet. Im allgemeinen wird dieses Verbindungmittel 11 jedoch mit anderen, im ersten Ausführungsbeispiel beschriebenen Verbindungsmitteln, insbesondere dem Innenhimmelteil 4, kombiniert werden, um eine automatische Ablage des Verdecks zu ermöglichen.

## Patentansprüche

1. Verdeck für ein Cabriolet-Fahrzeug, umfassend
einen Ablageraum (2) zur Ablage des Verdecks in einem geöffneten Verdeckzustand,
ein im wesentlichen formsteifes Abdeckmittel (1) zum Überdecken des Ablageraums (2) in einem geschlossenen Verdeckzustand, und
einen heckseitigen Verdeckabschnitt (3), wobei der Verdeckabschnitt (3) in dem geschlossenen Verdeckzustand zumindest teilweise oberhalb des Ablageraums (2) angeordnet ist,
wobei das Abdeckmittel (1) über zumindest ein Verbindungsmittel (4, 5, 6, 11) mit dem heckseitigen Verdeckabschnitt (3) verbunden ist, wobei das Abdeckmittel (1) durch eine Bewegung des Verdeckabschnitts (3) mittels des Verbindungsmittels (4, 5, 6, 11) bewegbar ist,
**dadurch gekennzeichnet, dass** das Abdeckmittel (1) in dem geschlossenen Verdeckzustand mit seiner vorderen Abschlusskante (1a) von unten gegen einen Vorsprung (16) einer heckseitigen Abtrennung (12) des Passagierraums in eine obere Endposition ziehbar ist.

2. Verdeck nach Anspruch 1, **dadurch gekennzeichnet, dass** im Zuge einer Verdecköffnungsbewegung eine automatische Ablage des Abdeckmittels (1) in dem Ablageraum (2) erfolgt.

3. Verdeck nach Anspruch 1 oder 2, **dadurch gekennzeichnet, dass** der heckseitige Verdeckabschnitt (3) eine hintere seitliche Dachsäule (7) des Verdecks umfaßt.

4. Verdeck nach Anspruch 3, **dadurch gekennzeichnet, dass** ein Innenhimmel vorgesehen ist, wobei ein Teil (4) des Innenhimmels in einem geschlossenen Verdeckzustand vor der hinteren seitlichen Dachsäule (7) angeordnet ist, wobei das Verbindungsmittel den Teil (4) des Innenhimmels umfaßt.

5. Verdeck nach einem der Ansprüche 1 bis 4, **dadurch gekennzeichnet, dass** der heckseitige Verdeckabschnitt (3) einen Spannbügel (8) des Verdecks umfaßt, wobei das Abdeckmittel (1) durch das Verbindungsmittel (4, 5, 6) gegen den Spannbügel (8) spannbar ist.

6. Verdeck nach einem der Ansprüche 1 bis 5, **dadurch gekennzeichnet, dass** der heckseitige Verdeckabschnitt (3) eine geneigte hintere Verdeckfläche (9) umfaßt.

7. Verdeck nach Anspruch 6, **dadurch gekennzeichnet, dass** das Abdeckmittel (1) mittels des Verbindungsmittels (6) an der geneigten Verdeckfläche (9) gehalten ist.

8. Verdeck nach Anspruch 6 oder 7, **dadurch gekennzeichnet, dass** die geneigte Verdeckfläche (9) eine starre Heckscheibe (10) des Verdecks umfaßt.

9. Verdeck nach Anspruch 8, **dadurch gekennzeichnet, dass** die starre Heckscheibe (10) in dem geöffneten Verdeckzustand unmittelbar auf dem Abdeckmittel (1) aufliegt.

10. Verdeck nach einem der Ansprüche 1 bis 9, **dadurch gekennzeichnet, dass** das Abdeckmittel (1) gelenkig mit dem Verdeck verbunden ist.

11. Verdeck nach Anspruch 10, **dadurch gekennzeichnet, dass** das Abdeckmittel (1) über eine Viergelenkanordnung (11) mit einem Spannbügel (8) des Verdecksverbunden ist.

12. Verdeck nach einem der Ansprüche 1 bis 11, **dadurch gekennzeichnet, dass** in dem geschlossenen Verdeckzustand eine vordere Kante (1a) des Abdeckmittels stoßbündig an einer heckseitigen Abtrennung (12) eines Passagierraums des Fahrzeugs anliegt.

13. Verdeck nach einem der Ansprüche 1 bis 12, **dadurch gekennzeichnet, dass** das Abdeckmittel (1) in dem geschlossenen Verdeckzustand durch das Verbindungsmittel (4, 5) in Fahrzeuglängsrichtung gehalten ist.

14. Verdeck nach einem der Ansprüche 1 bis 13, **dadurch gekennzeichnet, dass** das Abdeckmittel (1) in dem geschlossenen Verdeckzustand durch das Verbindungsmittel (4, 6) in senkrechter Richtung gehalten ist.

15. Verdeck nach einem der Ansprüche 1 bis 14, **dadurch gekennzeichnet, dass** in dem geöffneten Verdeckzustand das Verdeck insgesamt auf dem Abdeckmittel (1) abgelegt ist.

## Claims

1. A top for a convertible, comprising
a storage space (2) for storing the top in an opened state of the top,
an essentially shape-preserving covering means (1) for covering the storage space (2) in a closed state of the top, and
a rear top section (3), the top section (3) being arranged at least partially above the storage space (2) in the closed state of the top, wherein the covering means (1) is connected to the rear top section (3) via at least one connecting means (4, 5, 6, 11), wherein the covering means (1) is movable by means of the connecting means (4, 5, 6, 11) by way of a movement of the top section (3),
**characterized in**
**that** in the closed state of the top, the covering means (1) can be pulled with its front edge (1a) from below against a projection (16) of a rear partition (12) of the passenger compartment.

2. The top according to claim 1, **characterized in that**, in the course of a top-opening movement, the covering means (1) is automatically stored in the storage space (2).

3. The top according to claim 1 or 2, **characterized in that** the rear top section (3) comprises a rear lateral roof pillar (7) of the top.

4. The top according to claim 3, **characterized in that** an inside roof lining is provided, one part (4) of the inside roof lining being arranged in front of the rear lateral roof pillar (7) in a closed state of the top, the connecting means comprising the part (4) of the inside roof lining.

5. The top according to one of claims 1 to 4, **characterized in that** the rear top section (3) comprises a tensioning bow (8) of the top, it being possible for the covering means (1) to be clamped against the tensioning bow (8) by the connecting means (4, 5, 6).

6. The top according to one of claims 1 to 5, **characterized in that** the rear top section (3) comprises an inclined rear top surface (9).

7. The top according to claim 6, **characterized in that** the covering means (1) is held on the inclined top surface (9) by means of the connecting means (6).

8. The top according to claim 6 or 7, **characterized in that** the inclined top surface (9) comprises a rigid rear window (10) of the top.

9. The top according to claim 8, **characterized in that** the rigid rear window (10) rests directly on the covering means (1) in the opened state of the top.

10. The top according to one of claims 1 to 9, **characterized in that** the covering means (1) is connected to the top in an articulated manner.

11. The top according to claim 10, **characterized in that** the covering means (1) is connected to a tensioning bow (8) of the top via a four-bar-linkage arrangement (11).

12. The top according to one of claims 1 to 11, **characterized in that**, in the closed state of the top, a front edge (1a) of the covering means bears level against a rear partition (12) of a passenger compartment of the vehicle.

13. The top according to one of claims 1 to 12, **characterized in that** the covering means (1) in the closed state of the top is held in the longitudinal direction of the vehicle by the connecting means (4, 5).

14. The top according to one of claims 1 to 13, **characterized in that** the covering means (1) in the closed state of the top is held in the vertical direction by the connecting means (4, 6).

15. The top according to one of claims 1 to 14, **characterized in that** the top as a whole is stored on the covering means (1) in the opened state of the top.

## Revendications

1. Capote pour véhicule convertible, comprenant :
un espace de rangement (2) pour ranger la capote dans un état de capote ouverte,
un moyen de recouvrement (1) de forme essentiellement rigide, pour recouvrir l'espace de rangement (2) dans un état de capote fermée, et
une portion de capote arrière (3), la portion de capote arrière (3) étant disposée dans l'état de capote fermée au moins en partie au-dessus de l'espace de rangement (2),
le moyen de recouvrement (1) étant connecté par le biais d'au moins un moyen de connexion (4, 5, 6, 11) à la portion de capote arrière (3), le moyen de recouvrement (1) pouvant être déplacé par un déplacement de la portion de capote (3) au moyen du moyen de connexion (4, 5, 6, 11),
**caractérisée en ce**
**que** le moyen de recouvrement (1) peut être tiré dans une position d'extrémité supérieure dans l'état de capote fermée, avec son arête de terminaison avant (1a) depuis le dessous contre une saillie (16) d'une séparation arrière (12) de l'habitacle des passagers.

2. Capote selon la revendication 1, **caractérisée en ce qu'**au cours d'un mouvement d'ouverture de la capote, il se produit un rangement automatique du moyen de recouvrement (1) dans l'espace de rangement (2).

3. Capote selon la revendication 1 ou 2, **caractérisée en ce que** la portion de capote arrière (3) comprend une colonne de toit latérale arrière (7) de la capote.

4. Capote selon la revendication 3, **caractérisée en ce que** l'on prévoit un plafond intérieur, une partie (4) du plafond intérieur étant disposée dans un état de capote fermée avant la colonne de toit latérale arrière (7), le moyen de connexion comprenant la partie (4) du plafond intérieur.

5. Capote selon l'une quelconque des revendications 1 à 4, **caractérisée en ce que** la portion de capote arrière (3) comprend un étrier de tensionnement (8) de la capote, le moyen de recouvrement (1) pouvant être tendu par le moyen de connexion (4, 5, 6) contre l'étrier de tensionnement (8).

6. Capote selon l'une quelconque des revendications 1 à 5, **caractérisée en ce que** la portion de capote arrière (3) comprend une surface de capote arrière inclinée (9).

7. Capote selon la revendication 6, **caractérisée en ce que** le moyen de recouvrement (1) est maintenu contre la surface de capote inclinée (9) au moyen du moyen de connexion (6).

8. Capote selon la revendication 6 ou 7, **caractérisée en ce que** la surface de capote inclinée (9) comprend une vitre arrière rigide (10) de la capote.

9. Capote selon la revendication 8, **caractérisée en ce que** la vitre arrière rigide (10) s'applique directement contre le moyen de recouvrement (1) dans l'état de capote ouverte.

10. Capote selon l'une quelconque des revendications 1 à 9, **caractérisée en ce que** le moyen de recouvrement (1) est connecté de manière articulée à la capote.

11. Capote selon la revendication 10, **caractérisée en ce que** le moyen de recouvrement (1) est connecté par le biais d'un agencement de quadrilatère articulé (11) à un étrier de tensionnement (8) de la capote.

12. Capote selon l'une quelconque des revendications 1 à 11, **caractérisée en ce que** dans l'état de capote fermée, une arête avant (1a) du moyen de recouvrement s'applique en aboutement contre une séparation arrière (12) d'un habitacle des passagers du véhicule.

13. Capote selon l'une quelconque des revendications 1 à 12, **caractérisée en ce que** le moyen de recouvrement (1), dans l'état de capote fermée, est maintenu par le moyen de connexion (4, 5) dans la direction longitudinale du véhicule.

14. Capote selon l'une quelconque des revendications 1 à 13, **caractérisée en ce que** le moyen de recouvrement (1), dans l'état de capote fermée, est maintenu dans la direction verticale par le moyen de connexion (4, 6).

15. Capote selon l'une quelconque des revendications 1 à 14, **caractérisée en ce que** dans l'état de capote ouverte, la capote est posée en entier sur le moyen de recouvrement (1).
